Europäisches Patentamt

European Patent Office

Office européen des brevets

(19)

(11) Publication number: **0 066 085**
**A1**

## (12) EUROPEAN PATENT APPLICATION

(21) Application number: **82103550.8**

(22) Date of filing: **27.04.82**

(51) Int. Cl.³: **G 11 B 5/012**
**G 11 B 5/09**

(30) Priority: **29.05.81 US 268414**
**06.04.82 US 364121**

(43) Date of publication of application:
**08.12.82 Bulletin 82/49**

(84) Designated Contracting States:
**DE FR GB**

(71) Applicant: **International Business Machines**
**Corporation**

**Armonk, N.Y. 10504(US)**

(72) Inventor: **Grogan, John Matthew**
**298 Esteban Way**
**San Jose California 95119(US)**

(74) Representative: **Petersen, Richard Courtenay**
**IBM United Kingdom Patent Operations Hursley Park**
**Winchester Hants. SO21 2JN(GB)**

(54) Disk file and method of transducing.

(57) A magnetic disk file for storing data on a rotating magnetic disk (10) having concentric recording tracks includes where a first inner group (16) of tracks (14) is recorded at one frequency f1, providing optimum track capacity for these tracks, and a second outer group (17) of tracks (15) are recorded at a second higher frequency f2, which also provides optimum track capacity for these tracks. At each address position, each of two magnetic transducers (11, 12) is associated with a track from different groups. During the writing or reading of serial-by-byte data, the two tracks are transduced on successive revolutions. Suitable switching circuitry for switching from one transducer to the other in response to sensing index at the end of a physical recording track is provided and also for changing the clock frequency. The system further includes suitable disk formatting circuitry for converting the two physical tracks into one (or more) logical tracks having equal byte capacity.

The method of transducing includes the steps of switching at index from one transducer to the other and adjusting the clock frequency accordingly, so that all logical records have the same capacity. The magnetic disk may be divided into more than two groups of tracks, if desired.

FIG. 1

DISK FILE AND METHOD OF TRANSDUCING

This invention relates to magnetic disk files and methods of transducing concentric physical tracks on a rotating magnetic disk.

Various arrangements have been suggested for storing data on a magnetic disk file. Generally, the disk file is arranged with each disk having a plurality of concentric recording tracks on which fixed or variable length records are recorded. In most systems, the amount of data stored on each track is the same regardless of its actual physical length, because one basic recording frequency is employed to record data on all tracks. Those persons having ordinary skill in the art of storing data on disk files understand and appreciate the advantage of having data tracks of equal known byte capacity where system considerations of data management are involved. Where each track of the system has the same capacity, the overall problems of where data is to be stored in the file is considerably simplified. It is, of course, known that where all the data is recorded at one frequency, a compromise is being made because the actual physical length of the tracks increases from the inside track to the outside track. It would, therefore, be possible to store considerably more data on a disk if the system was arranged so that the data was recorded at more than one frequency.

The prior art does suggest the recording of data at different frequencies on different tracks on the same disk so as to increase the overall storage capacity of the disk. However, such systems have not met with commercial acceptance because of the problems of additional overhead required of the rest of the system to manage the placement of data in the file. The present invention eliminates the data management problems encountered with prior art systems.

According to the invention, there is provided a magnetic disk file

2

including at least one rotatable disk having a plurality N of groups
of concentric physical recording tracks, a plurality N of magnetic
transducers each of which is associated with a different group of tracks
and which are positionable conjointly to selected tracks in different
groups in response to an externally supplied address signal, means for
generating a plurality N of different recording frequencies which
control the linear recording densities in tracks of the respective
groups whereby the byte capacity per track of the groups of tracks
differ, at least one logical track (LT01) including a first portion on
a physical track (PT1) of one group and a second portion on a corresponding physical track (PT2) of another group, and means for switching
from one recording frequency to another in response to sensing an index
signal transduced from the file at the end of transducing the first
portion, whereby the portions may be transduced in a continuous
operation.

The invention extends to a method of transducing concentric physical
tracks in a plurality N of groups on a rotating magnetic disk, which
groups of tracks are recorded at different frequencies that result in
each track of the different groups having a different byte capacity,
the method comprising conjointly positioning a plurality N of transducers to selected physical tracks in different groups in response
to a single address signal, and transducing each physical track in
turn with a transducer at a corresponding frequency, including sensing
the end of each physical track and, in response to such sensing,
switching from one transducer and frequency to another transducer and
frequency.

In an embodiment of the present invention data is recorded in the file,
for example, at two separate frequencies such that each track in an
inner band of concentric tracks that are serviced by one read/write
transducer stores X bytes, while each track in an outer band of
concentric tracks that are serviced by a second read/write transducer,

3

which is moved in unison with the first transducer, stores Y bytes of data. The system processes records stored on equal length logical tracks which have a length equal to $(X+Y)/Z$, where Z is an integor of 1 or greater so that at least one logical record has a first part recorded at one frequency and a second part recorded at the other frequency. The system is arranged such that at each physical address of the transducer positioning system, the recording or reading operation involves switching from one transducer to the other at the index point on the disk, resyncing the recording channel to the new frequency and continuing to record or read the logical track that was started prior to index.

It is, therefore, an object of the present invention to provide an improved system and method for storing data in a disk file at more than one frequency.

Another object of the present invention is to provide an improved method for reading and recording data at two or more separate frequencies in a disk file to increase overall storage capacity without causing data management problems.

A further object of the present invention is to provide a data storage system for a disk file in which at least two separate physical tracks having different storage capacities are read or written consecutively on successive revolutions of the disk, and the resulting data is converted to one or more equal capacity logical tracks. At least one logical track, therefore, has a first portion recorded at one frequency and a second portion recorded at a second frequency.

The scope of the invention is defined by the appended claims; and how it is to be carried into effect is hereinafter particularly described with reference to the accompanying drawings, in which :-

4

FIGURE 1 illustrates in block diagram a disk file data storage system
embodying the present invention;

FIGURE 2 is a drawing illustrating diagrammatically how two consecutive
recording tracks read from the file on successive revolutions are
converted to three logical tracks; and

FIGURE 3 illustrates the functional details of the recording channel
shown in Fig.1.

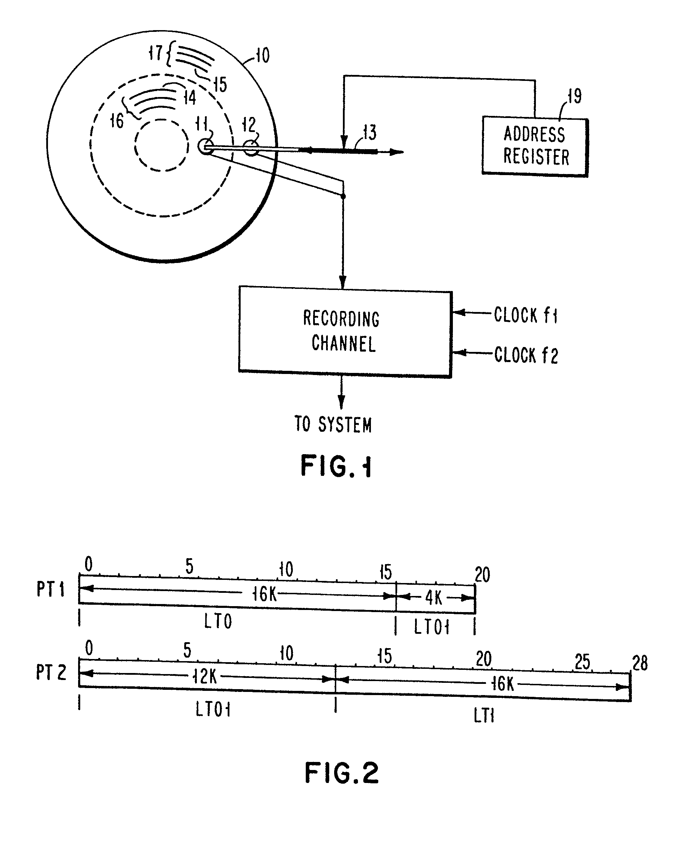

A magnetic disk file (Fig.1) comprises a magnetic recording disk 10, a
pair of magnetic read/write transducers 11 and 12, means 13 for conjointly positioning the transducers 11 and 12 to selected concentric
recording tracks 14, and means (not shown) for rotating the disk 10.
One group 16 of tracks is associated with transducer 11 while the other
group 17 of tracks is associated with transducer 12.  Transducers 11
and 12 are positionable conjointly by positioning means 13 in response
to a track address supplied to an address register 19 of the positioning
means 13.  All the tracks of group 16, which are serviced by transducer
11, are recorded under the control of a clocking signal having a
frequency f1.  All the tracks of group 17, which are serviced by
transducer 12, are recorded under a clocking signal having a frequency
f2, which is higher than f1.  As a result, all the tracks in group 16
have the same storage capacity C1, measured in terms of the number of
byte positions.  Likewise, all the tracks in group 17 have the same
storage capacity C2, also measured in number of byte positions, and C2
will have a relationship to C1 which is similar to the relationship of
f2 to f1.  For purposes of explanation, it can be assumed that the
tracks in group 16 each store 20,000 bytes, while the tracks in group 17
each store 28,000 bytes.  Thus, f2 is equal to 1.4 x f1.

Fig. 2 illustrates how a pair of physical tracks PT1 and PT2 associated
with one address position of the positioning means are formatted into,

5

for example, three logical tracks LT0, LT01, and LT1.  On the assumption
that PT1 has a 20,000 byte capacity and PT2 has a 28,000 byte capacity,
each logical track LT has a byte capacity of 16,000 bytes.  The manner
in which each logical track is actually formatted will depend on the
system nvironment and the details thereof are not part of the present
invention.  Any format known in the art for formatting tracks into
blocks, segments or count-key-and-data records may be employed.  Therefore,
no details of the record format of the logical track is included in this
description of  he invention.  While Fig.2 shows physical tracks PT1 and
PT2 divided into three logical tracks, it should be understood that the
two tracks could be combined as one logical track of 48K bytes, two
logical tracks of 24K bytes, four logical tracks of 12K bytes, etc.

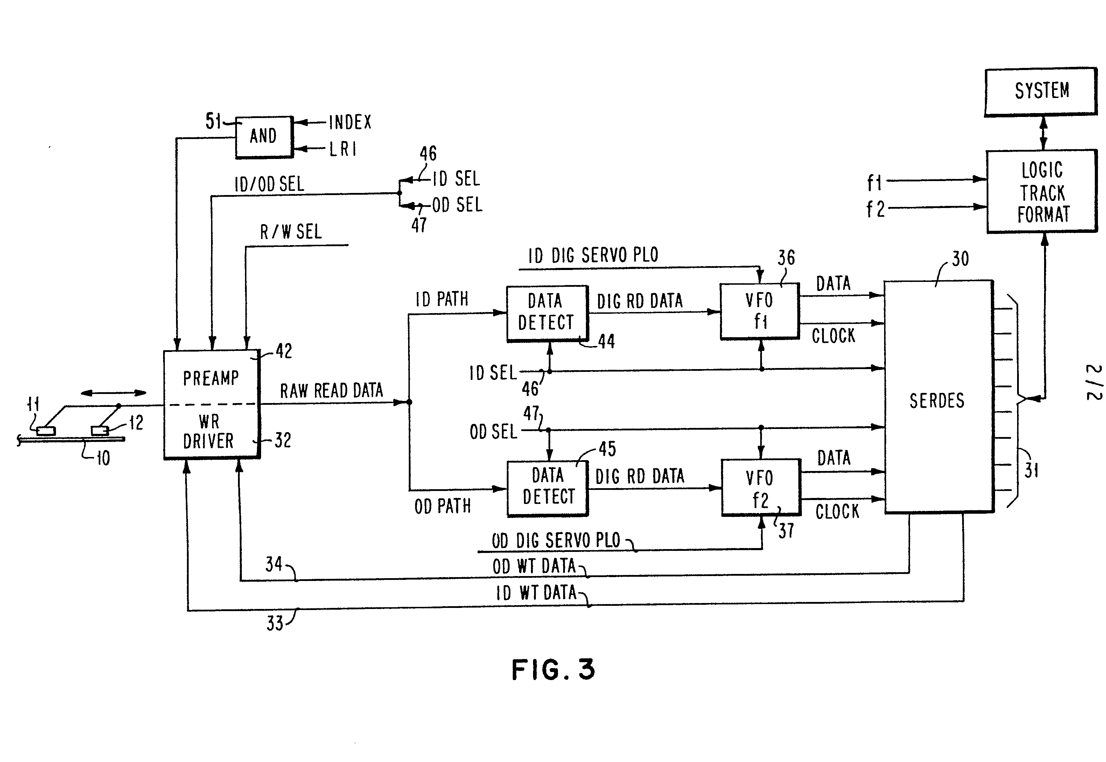

The details of the recording channel are shown functionally in Fig.3.
As shown in Fig.3, the recording channel comprises a serialiser-deserialiser
SERDES 30 whose function is to serialize the parallel-by-bit, serial-by-
byte data supplied from a data processing system (not shown) via bus 31.
Serializer 30 also deserializes serial-by-bit data from the file to
supply parallel-by-bit, serial-by-byte data to the data processing system.
Serial-by-bit write data is supplied to the write driver 32 on write data
lines 33 and 34.  Write data line 33 supplies write data at frequency f1
which corresponds to the frequency of variable frequency oscillator 36
which is associated with the group 16 of tracks serviced by transducer 11
corresponding  o the inner band or recording tracks.  The write data
line 34 supplies write data at frequency f2 which corresponds to the
frequency or variable frequency  oscillator 37 which is associated
with the group 17 of tracks serviced by transducer 12 in the outer band
of recording tracks.  While two variable frequency oscillators are
shown, one device which performs both functions may be employed.

Variable frequency oscillators 36 and 37 are synchronized by signals
from a phase-locked oscillator which is synchronized to the rotation
of the disk file, as is well known in the art.

The write driver 32 is selected by a read/write logic signal which indicates a write or read operation for one of the heads. One of the two transducers is selected by the ID/OD select signal. This latter signal is switched at index by the output of AND-gate 51 from transducer 11 to transducer 12 whenever a logical track spanning index (that is a logical track divided between two physical tracks) is addressed by the system. Index is a signal transduced from the disk file at the beginning of each physical track.

The transducers 11 and 12 are also connected to a preamplifier 42 which provides raw read data to a pair of data detectors 44 and 45, one of which is associated with each head.

Data detector 44 is selected by the "ID" select line 46 while data detector 45 is selected by the "OD" select line 47. The output of the data detector 44 is supplied to the oscillator 36 which provides standardized data and a double frequency clock signal to SERDES 30 on the assumption that data was initially encoded and recorded on the file in one of the known double frequency self-clocking codes.

Data detector 45 likewise is connected to oscillator 37 to provide similar signals to SERDES 30.

The operation of the system shown is as follows. Assume, for example, that three logical tracks, each having a 16K byte capacity, are to be written as shown in Fig.2. It should further be assumed that the serial-by-byte data supplied to SERDES 30 comprises both format type data and actual data bytes from the system, and that each logical track is formatted as a conventional count-key-and-data record permitting variable length data records in each of the tracks. On the above assumption, SERDES is loaded under the control of the system with appropriate format data which determines the count-key-and-data fields along with the respective G1, G2 and G3 gaps, such that three separate logical tracks are stored on two physical tracks corresponding to one address of the transducer positioning system. A signal is generated each time a predetermined number of byte portions has been transduced corresponding to the capacity of each logical track.

The first logical track LT0 of 16K bytes of data is recorded at frequency f1 in the inner physical track PT1. Writing of the second logical track LT01 then begins with 4K bytes of data at frequency f1 in the physical track PT1.

During the writing of the second logical track, after the transfer of the first 4K bytes of data from SERDES, the end of the inner physical track PT1 being serviced by transducer 11 is sensed, an index signal generated and the ID/OD select line switched to actuate transducer 12 which records the remaining 12K bytes of data of the second logical track LT01 on the outer physical track PT2 at the frequency f2, because the write data is now being supplied at frequency f2 which is higher than f1. The third logical track LT1 is stored on the second physical track PT2 after the 12K bytes of data are recorded for the second logical track LT01. The overall result is as shown in Fig.2. That is, three logical tracks LT0, LT01 and LT1, each having the same capacity, have been stored on two separate physical tracks and are recorded at two separate frequencies to optimize their respective storage capacities.

A similar operation occurs when data is read, the appropriate switching action occurring at the end of the first physical track so that if the second logical track LT01 is being accessed, 4K bytes of data are read from the inner track PT1 at frequency f1, while 12K bytes of data are read from the outer track PT2 at frequency f2.

8

The accessing of a non-overlapping logical track of less than a
physical track in length is accomplished in a manner similar to
conventional prior art systems in which the logical track corresponds exactly to the physical track, or at least in systems where
a logical track does not split between two physical tracks recorded
at different frequencies.

While the invention has been particularly shown and described with
reference to a preferred embodiment thereof, it will be understood
by those skilled in the art that various other changes in the form
and details may be made therein without departing from the scope of
the invention.  For example, the disk could be divided into three
groups of tracks and the positioning system provided with three
separate but conjointly positioned transducers to record data at
frequencies f1, f2 and f3, respectively, such that three physical
tracks would be addressed at one position to provide one or more
logical tracks of equal length.  Where two or more logical tracks
occur, the length or capacity of one logical track would be a submultiple of the total length or capacity of the three physical tracks.

It will also be recognized by those persons skilled in the art that
the concept disclosed may be extended to include more than one disk
surface since it is conventional in today's disk file configurations
employing more than one recording surface to provide transducers which
are permanently associated with each recording surface of the disk
file.  Depending on the relationship of the capacity of the physical
tracks that are concatenated on one surface to the desired capacity
of the logical tracks, the system could be arranged, for example, first
to operate on the inside track on one disk surface, then, at the end
of the first revolution to switch from the inside track to the outside
track of the one disk surface as previously described, then, at the end
of the second revolution, to switch to the outside track on another

9

disk surface, and, at the end of the third revolution, to switch to the inside track of the other surface, so that at the end of the operation four physical tracks have been concatenated. With such an arrangement, five logical tracks of 60K bytes could be stored on four physical tracks where the inner tracks have a capacity of 65K bytes and the outer tracks a capacity of 85K bytes.

10

CLAIMS

1    A magnetic disk file including at least one rotatable disk (10) having a plurality N of groups (16,17) of concentric physical recording tracks (14,15), a plurality N of magnetic transducers (11,12), each of which is associated with a different group of tracks and which are positionable conjointly to selected tracks in different groups in response to an externally supplied address signal, means (36,37) for generating a plurality N of different recording frequencies which control the linear recording densities in tracks of the respective groups whereby the byte capacity per track of the groups of tracks differ, at least one logical track (LT01) including a first portion on a physical track (PT1) of one group and a second portion on a corresponding physical track (PT2) of another group, and means for switching from one recording frequency to another in response to sensing an index signal transduced from the file at the end of transducing the first portion, whereby the portions may be transduced in a continuous operation.

2    A file according to claim 1, including means for generating an index signal which defines the beginning of each physical track and means for selectively switching between transducers in response to sensing the index signal from the file.

3    A file according to claim 1 or 2, including means for phase synchronizing the selected recording frequency to the rotation of the file.

4    A file according to claim 1, 2 or 3, in which the means for generating recording frequencies includes variable frequency oscillator means and means for switching the oscillator means from one frequency to another in response to sensing the index signal.

5    A disk file according to claim 1, 2, 3 or 4, in which the corresponding physical tracks of the groups are formatted into a plurality of equal capacity logical tracks.

6    A file according to claim 5, in which each logical track has a capacity which is a submultiple of the sum of the byte capacities of the N physical tracks.

7    A method of transducing concentric physical tracks in a plurality N of groups on a rotating magnetic disk, which groups of tracks are recorded at different frequencies that result in each track of the different groups having a different byte capacity, the method comprising conjointly positioning a plurality N of transducers to selected physical tracks in different groups in response to a single address signal, and transducing each physical track in turn with a transducer at a corresponding frequency, including sensing the end of each physical track and, in response to such sensing, switching from one transducer and frequency to another transducer and frequency.

8    A method according to claim 7, including generating a signal indicating the end of a logical track each time a predetermined number of byte positions has been transduced by the transducers to provide one or more logical tracks of equal capacity.

9    A method according to claim 7 or 8, including the step of generating an index signal at the end physical track and supplying the index signal to control circuitry to initiate the switching step.

10    A method according to claim 7, 8 or 9, in which a first logical record is transduced at a first data rate, a second logical record has a first portion transduced at the first data rate, and another portion transduced at a second data rate, and a third logical record is transduced at the second data rate.

RECORDING
CHANNEL

← CLOCK f1

← CLOCK f2

TO SYSTEM

ADDRESS
REGISTER

19

13

FIG. 1

FIG. 2

FIG. 3

2/2

0066085

European Patent
Office

**EUROPEAN SEARCH REPORT**

Application number

EP 82 10 3550.8

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| Y | Patent Abstracts of Japan<br>Vol. 2, No. 125, 20 October 1978<br>page 7477E78<br>& JP - A - 53 - 92109 | 1,7 | G 11 B 5/012<br>G 11 B 5/09 |
| Y | Patent Abstracts of Japan<br>Vol. 4, No. 160, 8 November 1980<br>page 136P35<br>& JP - A - 55 - 108918 | 1,7 | |
| | | | TECHNICAL FIELDS SEARCHED (Int.Cl. ³) |
| Y | US - A - 3 337 852 (F. LEE et al.)<br>* column 2, line 31 to column 3,<br>line 74; column 5, lines 19 to 32;<br>fig. 1 * | 1,7 | G 11 B 5/00 |
| A | DE - A - 1 774 486 (EX-CELL-O CORP.)<br>* claims 1, 3; page 4, lines 11 to 24 * | 1,4 | |
| A | US - A - 3 524 172 (J.A. HIBNER)<br>* column 2, line 57 to column 3,<br>line 56; fig. 1 * | 3,4,<br>9 | |

CATEGORY OF
CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 06-08-1982 | ROGNONI |

EPO Form 1503.1 06.78